# EUROPÄISCHE PATENTSCHRIFT

(11) **EP 2 687 536 B1**
(45) Veröffentlichungstag und Bekanntmachung des Hinweises auf die Patenterteilung: **09.12.2015**
(21) Anmeldenummer: 12176901.2
(22) Anmeldetag: 18.07.2012
(51) Int. Cl.: C07F 9/22

(54) **Verfahren zur Herstellung von asymmetrischen (Thio)phosphorsäuretriamiden**
Method for producing asymmetric (thio)phosphate triamides
Procédé de fabrication de triamides d'acide (thio)phosphorique asymétriques

(43) Veröffentlichungstag der Anmeldung: 22.01.2014
(73) Patentinhaber: Saltigo GmbH, 51369 Leverkusen (DE)
(72) Erfinder: Gotta, Matthias, 51399 Burscheid (DE); Lehnemann, Bernd Wilhelm, 51063 Köln (DE); Lackner, Elmar, 50676 Köln (DE)
(74) Vertreter: Pettrich, Klaus-Günter

(56) Entgegenhaltungen:
- WO-A2-2010/045895

## Beschreibung

Gegenstand der vorliegenden Erfindung ist ein Verfahren zur Herstellung von asymmetrischen (Thio)phosphorsäuretriamiden aus (Thio)phosphorsäuretrichlorid und primären Aminen und Ammoniak.

Asymmetrische (Thio)phosphorsäuretriamide, insbesondere N-(n-Butyl)thiophosphorsäuretriamid (NBPT), sind Hemmstoffe für das beinahe ubiquitäre Enzym Urease, und werden harnstoffhaltigen Düngemitteln als Stabilisatoren zugesetzt, die ansonsten durch Urease Zersetzung zu Ammoniak und Kohlendioxid und damit frühzeitigen Wirkungsverlust erleiden würden (siehe z.B. EP0119487). Weitere Anwendungen sind z.B. die in WO 2000/061522 beschriebene Stabilisierung von Gülle gegen ureasebedingten Abbau des enthaltenden Harnstoffs sowie der Zusatz zu Toiletten- und Hygieneartikeln zur Verminderung von Geruchsbelästigungen im Sanitärbereich gemäß WO 2008/022925 und WO 2008/022919.

Die Synthese von NBPT (und verwandten Verbindungen) wurde erstmals in Goehring et al., Chem. Ber. 1956, 89, 1760 beschrieben, indem n-Butylammoniumchlorid mit einem großen Überschuss Thiophosphorsäuretrichlorid refluxiert, das gebildete N-Butylthiophosphoisäure-dichlordiamid durch fraktionierte Destillation isoliert und mit kondensiertem Ammoniak im Überschuss umgesetzt wurden. Zur Isolierung als Reinsubstanz wurde die Löslichkeit des als Nebenprodukt anfallenden Ammoniumchlorids im flüssigen Ammoniak genutzt:

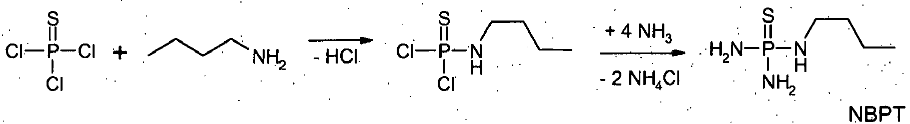

Nachteilig für die technische Umsetzung dieser Synthese sind die großen Überschüsse an (Thio)-phosphorsäuretrichlorid und Ammoniak (ca. 40 Äquivalente), die aufwendige Reinigungs- und Rückführungsoperationen erfordern, da eine Entsorgung als Abfall unwirtschaftlich wäre. Aufgrund der hohen Toxizität und Korrosivität von gasförmigem Chlorwasserstoff und (Thio)-phosphorsäuretrichlorid müsste eine geeignete Anlage überwiegend aus Spezialwerkstoffen bestehen, die diesen Verbindungen auch bei Rückflusstemperatur standhalten.

In WO 1998/031693 (vgl. auch WO 1998/031692 und WO 1998/031691) wird daher ein kontinuierliches technisches Verfahren zur Herstellung von NBPT und ähnlichen Verbindungen vorgeschlagen, welches die größten Probleme des obigen Herstellwegs vermeidet. Dazu werden die oben beschriebenen Reaktionsschritte in einem organischen Lösungsmittel in zwei hintereinandergeschalteten Reaktoren kontinuierlich betrieben, wobei das Zwischenprodukt nicht isoliert wird und das Reaktionsgemisch des ersten Schritts im zweiten Schritt mit mindestens 16, bevorzugt mindestens 20 Äq. Ammoniak umgesetzt wird. Im ersten Schritt, der bevorzugt bei 0 bis 15 °C durchgeführt wird, dient ein tertiäres Amin, z.B. ein Pyridinderivat oder ein Trialkylamin, als Hilfsbase, welche rückgewonnen und rezykliert wird. Zur Vermeidung der Abtrennung von Ammoniumchlorid als Feststoff nutzt dieses Verfahren die bereits von *Goehring et al.* beschriebene Löslichkeit von Ammoniumchlorid in flüssigem Ammoniak. Ein Teil des hohen Ammoniaküberschusses wird durch Brüdenkompression und Kühlung wieder verflüssigt und in das Verfahren zurückgeführt. Die Hilfsbase und das Lösungsmittel werden destillativ vom Produkt abgetrennt und ebenfalls in den Prozess zurückgeführt. Das Produkt fällt in hoher Ausbeute von ca. 90-92.4% an, allerdings lediglich in einer Reinheit von 92.4 bis 93.3%. Die in großen Mengen anfallende Ammoniak/Ammoniumchlorid-Phase wird in Wasser gelöst und muss kostenintensiv aufgearbeitet werden. Dieses Verfahren hat - neben der geringen, häufig unzureichenden Reinheit des Produkts - den Nachteil, dass es, wegen Durchführung bei 8-15 °C und unter erhöhtem Druck (bis ca. 7 bar) nicht in üblichen Mehrzweck-Anlagen implementiert werden kann, sondern eine eigens konstruierte, druckfeste Produktionsanlage benötigt und wegen des hohen verfahrenstechnischen Aufwands und der Komplexität der Anlage benötigt hohe Anfangsinvestitionen anfallen, die sich erst bei sehr großen Produktionsmengen amortisieren. Auch erfordert die anfallende große Menge an ammoniakalischer Ammoniumchlorid-Lösung einen geeigneten Entsorgungs- oder Aufarbeitungsweg.

WO 2010/045895 beschreibt einen im Batch-Verfahren in Standardapparaturen durchführbaren Prozess zur Herstellung der genannten Verbindungen einschließlich NBPT, der darin besteht, dass zwei Äquivalente des Amins in einem unpolaren organischen Lösungsmittel, bevorzugt Toluol, bei Raumtemperatur mit (Thio-)phosphorsäuretrichlorid umgesetzt werden, wobei das zweite Äquivalent das entstehende Molekül Chlorwasserstoff als Ammoniumsalz bindet, welches ausfällt und abfiltriert wird. Weiterhin wird das Filtrat dann bei 0 °C mit einem hohen Überschuss (ca. 15 Äq.) Ammoniak (flüssig) oder bei Raumtemperatur unter Druck mit einem Überschuss Ammoniak (gasförmig) zum Produkt umgesetzt, welches teilweise ausfällt, ebenso wie das entstehende Ammoniumchlorid.

Zu dessen Entfernung wird das Reaktionsgemisch auf 50-80 °C erwärmt, wobei das Produkt in Lösung geht und das Ammoniumchlorid abfiltriert wird. Beim Abkühlen des Filtrats fällt das Produkt aus und kann abfiltriert werden. Um ein kommerziell nutzbares NBPT mit einer Reinheit von >99% zu erreichen, muss das Produkt meist mehrfach aus Toluol umkristallisiert werden. Die angegebenen Ausbeuten liegen für das Rohprodukt bei 80-84% und für das umkristallisierte Produkt bei 68% bis 71 % d. Th. (Reinigungsverluste ca. 15%) bei einer Ansatzgröße von 25 mmol, bei einer Ansatzvergrößerung auf 2.05 mol sinkt die Rohausbeute auf lediglich 70%. Bei der technischen Umsetzung hat dieses Verfahren neben der geringen Ausbeute den Nachteil, dass mindestens vier Feststoff-Abtrennungsschritte durch Filtration erforderlich sind, um ein ausreichend reines Produkt zu erhalten, was einen sehr aufwendigen Anlagenaufbau bedingt. Hierdurch resultieren wiederum hohe Fertigungskosten. Die Verwendung von Toluol als Lösungsmittel verursacht aufgrund des niedrigen Schmelzpunkts von NBPT außerdem lange Trocknungszeiten.

WO 2007/054392 beschreibt ein Herstellverfahren, in welchem ähnlich zu demjenigen der WO 1998/031693 Thiophosphorsäuretrichlorid bei 30 °C in einem polaren organischen Lösungsmittel mit n-Butylamin in Gegenwart einer Hilfsbase (z.B. Tri-n-butylamin) reagiert und das Produktgemisch danach bei 0 °C mit Ammoniak umgesetzt wird. Zur Aufarbeitung wird dabei zunächst das ausgefallene Ammoniumchlorid mit einer ausreichenden Menge Wasser gelöst, die homogene organische Phase abgetrennt und das Lösungsmittel destillativ entfernt, so dass sich ein organisches Zweiphasensystem aus flüssiger Produktphase und Hilfsbase bildet, welche nicht miteinander mischbar sind. Die Produktphase wird abgetrennt und durch Eintragen in Wasser gefällt. Die Ausbeute beträgt 66% d. Th. an NBPT bei einer Reinheit von nur 76%. Die Reaktion kann ansatzweise oder (halb-)kontinuierlich durchgeführt werden. Dieses Verfahren weist jedoch die Nachteile einer geringen Ausbeute und einer sehr geringen Reinheit des isolierten Produkts auf, so dass im Regelfall weitere Reinigungsschritte erforderlich sind, um ein verkaufsfähiges Produkt zu erhalten.

WO 2009/121786 offenbart ein Verfahren zur Herstellung von asymmetrischen Thiophosphorsäureamiden einschließlich NBPT ausgehend vom N-(n-Alkyl)thiophosphorsäuredichlorid, welches sich dadurch auszeichnet, dass besonders wenige Nebenprodukte entstehen. Dies wurde erreicht, indem das N-(n-Alkyl)thiophosphorsäuredichlorid als Lösung auf unter 0 °C gekühlt, und rückvermischungsfrei in möglichst kurzer Zeit mit einem ebenfalls gekühlten Überschuss flüssigen Ammoniaks (10 bzw. 20 Äq.) so vermischt wurde, dass keine Reaktion während des Mischens erfolgt. Nach der Vermischung wurde das Reaktionsgemisch über einen Rohrreaktor, bevorzugt einen Wärmetauscher, in eine Kolonne gespeist, die das Reaktionsgemisch auftrennte. Es wurden Gesamtausbeuten zwischen ca. 85% und 96.4% für Stoffmischungen von NBPT mit N-Propylthiophosphorsäuretriamid (ebenfalls ein Urease-Inhibitor) angegeben, wobei die maximale Ausbeute an NBPT 70.5 % betrug. Der Prozess kann kontinuierlich oder diskontinuierlich betrieben werden.

Allerdings benötigt dieses Verfahren ebenfalls eine eigens konstruierte, druckfeste Produktionsanlage mit spezifischen Vorrichtungen um eine rückvermischungsfreie Mischung der Edukte zu gewährleisten. Außerdem ist das Verfahren auf die Herstellung von Stoffgemischen ausgelegt und deutliche Überschussmengen von 10 bis 20 Äq. Ammoniak sind erforderlich.

Die obigen Verfahren besitzen somit allesamt einen oder mehrere Nachteile, dahingehend, dass spezielle Anlagen hoher Komplexität bzw. stark erhöhte Druckbeständigkeit erforderlich sind, stark verunreinigte Rohprodukte, die einen hohen Reinigungsaufwand erfordern erhalten werden, niedere Ausbeuten an NBPT erhalten werden oder hohe Überschüsse an Ammoniak erforderlich sind, insbesondere bei Verwendung desselben als Cosolvens.

Die geringen Ausbeuten und schlechten Produktreinheiten in den beschriebenen Verfahren gehen teilweise auf eine geringe Selektivität vor allem in der ersten Stufe zurück, in der sich neben dem jeweils gewünschten Mono- bzw. Diamid der (Thio)phosphorsäure auch das jeweils unerwünschte Di- bzw. Monoamid sowie das Triamid der (Thio)phosphorsäure bilden:

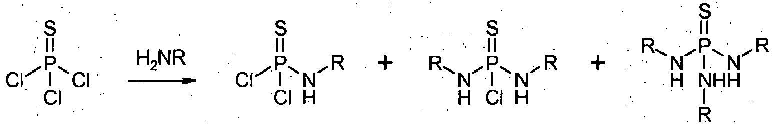

Allerdings werden die Nebenprodukte in noch stärkerem Maße in der zweiten Stufe gebildet, in welcher die im ersten Schritt gebildeten Mono- bzw. Diamid mit dem Triamid der (Thio)phosphorsäure reagieren können, wodurch sich dimere und oligomere (z. T. durch Folgereaktionen mit primärem Amin oder Ammoniak auch phosphazenähnliche) Nebenprodukte bilden (vgl. auch WO 2009/121786), z.B. nach folgendem Schema:

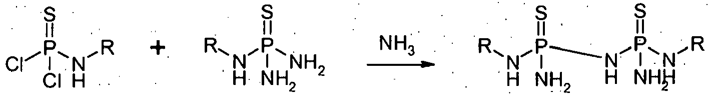

WO 2009/121786 umgeht dieses Problem durch aufwendige technische Maßnahmen, indem in der vorgeschlagenen kontinuierlichen Reaktion das (Thio)phosphorsäuredichloroamid in einer Spezialanlage in sehr kurzer Zeit rückvermischungsfrei mit Ammoniak umgesetzt wird, wobei die Konzentration des (Thio)phosphorsäuredichloramids sehr gering gehalten wird. Dies geht jedoch mit den bereits oben erwähnten Nachteilen einher.

Es bestand daher ein Bedürfnis nach einem Verfahren zur Herstellung von asymmetrischen (Thio)-phosphorsäuretriamiden, insbesondere von NBPT, welches diese Stoffe in guten Ausbeuten, hoher Reinheit und hohen Raum-Zeit-Ausbeuten bereitstellt und auch mit nur geringfügiger apparativer Anpassung in den in der Feinchemie üblichen Mehrzweck-Rührkessel-Anlagen implementiert werden kann, idealerweise ohne die Notwendigkeit erhöhter Drücke und großer Überschüsse an Ammoniak.

Aufgabe der vorliegenden Erfindung war es daher, ein in herkömmlichen rührkesselbasierten feinchemietypischen Mehrzweck-Anlagen durchführbares Verfahren bereitzustellen, welches entgegen dem oben dokumentierten Stand der Technik in der Lage ist, unsymmetrische (Thio)-phosphorsäuretriamide, insbesondere NBPT in guten Ausbeuten und Reinheiten zu liefern, ohne dass umständliche Reinigungsschritte (z.B. wiederholte Umkristallisation) oder kontinuierlich zu betreibende Spezialreaktoren erforderlich sind, wobei besonders hohe Überschüsse an Ammoniak vermieden werden sollten.

Überraschenderweise wurde nun gefunden, dass sich bei der Reaktion im angegeben Temperaturbereich die Nebenreaktionen der zweiten Stufe weitgehend unterdrücken lassen, und die Umsetzung des (Thio)phosphorsäureamidodichlorids und/oder (Thio)phosphorsäurediamidomonochlorids mit Ammoniak dennoch mit vorzüglicher Raum-Zeit-Ausbeute abläuft.

Die Aufgabe der Erfindung konnte gelöst werden durch ein Verfahren zur Herstellung von asymmetrischen (Thio)phosphorsäuretriamiden durch Umsetzung eines primären Amins mit (Thio)phosphorsäuretrichlorid zum entsprechenden (Thio)phosphorsäureamidodichlorid und/oder (Thio)phosphorsäurediamidomonochlorid und nachfolgender Umsetzung des gebildeten (Thio)phosphorsäureamidodichlorids oder (Thio)phosphorsäurediamidomonochlorids mit Ammoniak dadurch gekennzeichnet, dass die Umsetzung des (Thio)phosphorsäureamidodichlorids und/oder (Thio)phosphorsäurediamidomonochlorids mit Ammoniak zumindest teilweise, größtenteils, weitgehend oder vollständig bei einer Temperatur unter -30 °C, vorzugsweise im Bereich von -80 °C bis -32 °C, besonders bevorzugt im Bereich von - 60° C bis -35 °C und ganz besonders bevorzugt im Bereich von -55°C bis -40°C durchgeführt wird. Das erfindungsgemäße Verfahren wird dabei als Ein-Topf-Variante durchgeführt, d.h. die Umsetzung des primären Amins mit (Thio)phosphorsäuretrichlorid zum entsprechenden (Thio)phosphorsäureamidodichlorid und/oder (Thio)phosphorsäurediamidomonochlorid und die nachfolgende Umsetzung des gebildeten (Thio)phosphorsäureamidodichlorids oder (Thio)phosphorsäurediamidomonochlorids mit Ammoniak werden sequentiell im selben Reaktionsbehälter durchgeführt, und das durch Umsetzung eines primären Amins mit (Thio)phosphorsäuretrichlorid erhaltene (Thio)phosphorsäureamidodichlorid und/oder (Thio)phosphorsäurediamidomonochlorid wird nicht isoliert. Unter zumindest teilweiser Umsetzung der Reaktion ist dabei ein Umsatz von mindestens 20 %, unter größtenteils von mindestens 50 % und unter weitgehend von mindestens 90 % der bei Beginn der Ammoniakzugabe vorhandenen Säurechloridgruppen von (Thio)phosphorsäureamidodichlorid und (Thio)phosphorsäurediamidomonochlorid mit Ammoniak zu verstehen.

Im Rahmen dieser Anmeldung kann der Begriffsbestandteil (Thio)phosporsäure entweder als Thiophosporsäure oder als Phosphorsäure ausgelegt werden. Bevorzugt ist die Auslegung als Thiophosporsäure. Unter asymmetrischen (Thio)phosphorsäuretriamiden im Sinne der vorliegenden Erfindung sind Thiophosphorsäuretriamide oder Phosphorsäuretriamide zu verstehen, bei denen an das Phosphoratom zwei NH₂-Gruppen und eine NHR-Gruppe oder eine NH₂ Gruppe und zwei NHR-Gruppen trägt, wobei R einen organischen Rest darstellt. Da je nach Wahl der eingesetzten Mengen an primärem Amin und (Thio)phosphorsäuretrichlorid auch eine Mischung von Thiophosphorsäuretriamiden bzw. Phosphorsäuretriamiden mit einer bzw. zwei NHR-Gruppen am Phosphoratom erhalten wird, fallen auch solche Mischungen unter die Definition der asymmetrischen (Thio)phosphorsäuretriamide.

In einer bevorzugten Ausführungsform betrifft die vorliegende Erfindung die Herstellung von asymmetrischen (Thio)phosphorsäuretriamiden durch Umsetzung eines primären Amins mit (Thio)phosphorsäuretrichlorid zum entsprechenden (Thio)phosphorsäureamidodichlorid und nachfolgender Umsetzung desselben mit Ammoniak zum asymmetrischen (Thio)phosphorsäuretriamid.

Besonders bevorzugt ist die Herstellung von Thiophosphorsäuretriamiden durch Umsetzung eines primären Amins mit Thiophosphorsäuretrichlorid zum entsprechenden Thiophosphorsäureamidodichlorid und nachfolgender Umsetzung desselben mit Ammoniak.

Das für das vorliegende Verfahren verwendete primäre Amin entspricht der Formel R-NH₂, wobei R für einen organischen Rest, vorzugsweise für einen unsubstituierten oder mit einer oder mehreren unter den Reaktionsbedingungen inerten Gruppen substituierten Alkyl-, Cycloalkyl-, Aryl- oder Heteroarylrest. Beim Alkyl-, Cycloalkyl-, Aryl- oder Heteroarylrest handelt es sich vorzugsweise um einen C₁-C₁₈ Alkyl-, C₃-C₁₂ Cycloalkyl-, C₆-C₁₄ Aryl- oder C₄-C₁₃ Heteroarylrest, besonders bevorzugt um einen C₁-C₁₀ Alkylrest, ganz besonders bevorzugt um einen unsubstituierten C₁-C₆ Alkylrest und am meisten bevorzugt um n-Butyl. Bevorzugte inerte Gruppen sind Alkyl, Aryl, Heteroaryl, Alkoxy, Aryloxy, Heteroaryloxy, Alkylthio, Arylthio, Heteroarylthio, Fluor, Chlor, Brom, Cyano, besonders bevorzugt C₁-C₁₈ Alkyl, C₆-C₁₄ Aryl, C₄-C₁₃ Heteroaryl, C₁-C₁₈ Alkoxy, C₆-C₁₄ Aryloxy, C₄-C₁₃ Heteroaryloxy, C₁-C₁₈ Alkylthio, C₆-C₁₄ Arylthio, C₄-C₁₃ Heteroarylthio, Fluor, Chlor, Brom, Cyano, und ganz besonders bevorzugt C₁-C₈ Alkyl, C₆-C₁₀ Aryl, C₄-C₉ Heteroaryl, C₁-C₈ Alkoxy, C₆-C₁₀ Aryloxy, C₄-C₉ Heteroaryloxy, C₁-C₈ Alkylthio, C₆-C₁₀ Arylthio, C₄-C₉ Heteroarylthio, Fluor, Chlor, Brom und Cyano.

Zur Darstellung von (Thio)phosphorsäureamidodichlorid wird beim vorliegenden Verfahren das primäre Amin bevorzugt in einer Menge von 0.8 bis 1.2, besonders bevorzugt von 0.98 bis 1.05 Äquivalenten und ganz besonders bevorzugt von 1 Äquivalent eingesetzt. Zur Darstellung von (Thio)phosphorsäurediamidomonochlorid hingegen, wird das primäre Amin bevorzugt in einer Menge von 1.8 bis 2.2, besonders bevorzugt von 1.96 bis 2.1 Äquivalenten und ganz besonders bevorzugt von 2 Äquivalenten bezogen auf (Thio)phosphorsäuretrichlorid, eingesetzt. Vorzugsweise erfolgt die Umsetzung des primären Amins mit (Thio)phosphorsäuretrichlorid in Anwesenheit einer Hilfsbase, um den bei der Umsetzung gebildeten Chlorwasserstoff zu binden. Als Hilfsbase dient vorzugsweise ein tertiäres Amin, besonders bevorzugt ein tertiäres Trialkylamin, N-Alkylpyrrolidin, N-Alkylpiperidin, N-Alkylmorpholin, Dialkylanilin, ein Pyridin oder ein polycyclisches tertiäres Amin mit heteroyclischer Struktur wie DABCO, DBU oder Chinuclidin.

Zur Synthese von (Thio)phosphorsäureamidodichlorid wird die Hilfsbase beim vorliegenden Verfahren zweckmäßigerweise in einer Menge von 0.7 bis 10, bevorzugt von 0.8 bis 2, besonders bevorzugt von 0.98 bis 1.2 Äquivalenten und ganz besonders bevorzugt von genau 1 Äquivalent und zur Synthese von (Thio)phosphorsäurediamidomonochlorid in einer Menge von 1.6 bis 10, bevorzugt von 1.8 bis 4, besonders bevorzugt von 1.96 bis 2.4 Äquivalenten und ganz besonders bevorzugt von genau 2 Äquivalenten bezogen auf (Thio)phosphorsäuretrichlorid, eingesetzt.

Bedingt durch den besonders glatten Reaktionsverlauf bei der Umsetzung zum (Thio)phosphorsäuretriamid im oben genannten Temperaturbereich genügt es, nicht mehr als 10 Äquivalente, vorzugsweise nicht mehr als 8 Äquivalente Ammoniak bezogen auf (Thio)phosphorsäuretriamid einzusetzen. Die Verwendung größerer Mengen Ammoniak ist selbstverständlich möglich, aus ökologischen und ökonomischen Gründen aber meist wenig attraktiv. Die Minimalmenge an Ammoniak ergibt sich für den Fachmann aus der Anzahl der einzuführenden Amidgruppen und der Bindung des entstehenden Chlorwasserstoffs.

Zudem ist es möglich, (Thio)phosphorsäureamidodichlorid und/oder (Thio)phosphorsäurediamidomonochlorid oder ein Reaktionsgemisch enthaltend mindestens eine dieser Verbindungen vorzulegen, und Ammoniak zuzugeben, d. h. zu Beginn der Umsetzung mit einem Unterschuss an Ammoniak zu arbeiten.

Die niedere Reaktionstemperatur bei der Umsetzung mit Ammoniak erlaubt zudem das Verfahren bei einem niederen absoluten Druck von weniger als 3, vorzugsweise im Bereich von 0.3 bis 2 bar, besonders bevorzugt im Bereich von 0.8 bis 1.5 bar durchzuführen. In einer ganz besonders bevorzugten Form wird das Verfahren "drucklos", d. h. bei Atmosphärendruck durchgeführt.

Beim vorliegenden Verfahren wird die Umsetzung des primären Amins mit (Thio)phosphorsäuretrichlorid und/oder die Umsetzung des (Thio)phosphorsäureamidodichlorids und/oder (Thio)-phosphorsäurediamidomonochlorids mit Ammoniak üblicherweise in einem polaren aprotischen organischen Lösungsmittel oder Lösungsmittelgemisch durchgeführt, welches vorzugsweise eines oder mehrere der folgenden Lösungsmittel enthält oder aus diesen besteht: Ethylacetat, Propylacetat, Isopropylacetat, Butylacetat, Isobutylacetat, Tetrahydrofuran, 2-Methyltetrahydrofuran, 1,4-Dioxan, Diethylether, Diisopropylether, Di-n-propylether, Di-n-butylether, Methyl-tert-butylether, Diisobutylether, Dimethoxyethan, Aceton, Methylisobutylketon.

Die Lösungsmittelmenge wird zweckmäßigerweise so gewählt, dass das Reaktionsgemisch bei Reaktionstemperatur gut rührbar, aber nicht unnötig verdünnt ist. Sie ist abhängig von der Natur der Einsatzmaterialien und der Art des gewählten Lösungsmittels. In einer bevorzugten Ausführungsform wird das organische Lösungsmittel oder Lösungsmittelgemisch in einer solchen Menge verwendet wird, dass die Konzentration an (Thio)phosphorsäuretrichlorid zu Beginn der Umsetzung mit dem primären Amin im Bereich von 0.5 bis 5 mol/kg Lösungsmittel liegt.

Erstaunlicherweise hat sich auch ergeben, dass der erste Schritt beim vorliegenden Verfahren, d. h. die Umsetzung des primären organischen Amins mit (Thio-)Phosphorsäuretrichlorid, bei sehr niederer Temperatur mit sehr hoher Selektivität verläuft, so dass die letztlich erhaltene Zielverbindung auch bei herkömmlicher Ansatz-Fahrweise in hoher Ausbeute und Reinheit entsteht.

Bevorzugt erfolgt die Umsetzung des primären Amins mit (Thio)phosphorsäuretrichlorid daher teilweise, größtenteils, weitgehend oder vollständig bei einer Temperatur von unter -20 °C, vorzugsweise im Bereich von -80 °C bis -25, besonders bevorzugt im Bereich von -50°C bis kleiner -30 °C. Unter teilweiser Umsetzung der Reaktion ist dabei ein Umsatz von mindestens 20 mol%, unter größtenteils von mindestens 50 mol% und unter weitgehend von mindestens 90 mol% des (Thio)phosphorsäuretrichlorids zu verstehen.

Zur Aufarbeitung der Produktgemische enthaltend die unsymmetrischen (Thio)phosphorsäuretriamide können die bei der Reaktion entstandene Ammoniumsalze durch Filtration oder wässrige Extraktion aus dem Reaktionsgemisch entfernt werden. Vorzugsweise erfolgt eine Extraktion, wobei besonders bevorzugt die zur Lösung der Ammoniumsalze minimal erforderliche Wassermenge, verwendet wird.

In einer vorteilhaften Ausführungsform wird (Thio)phosphorsäuretriamid aus dem Produktgemisch gefällt. Die Fällung geschieht üblicherweise durch Einstellung der Konzentration von (Thio)phosphorsäuretriamid im Produktgemisch, entweder durch Verdünnung oder Aufkonzentration, bevorzugt durch destillative Entfernung eines Teils des Reaktionslösungsmittels, und gegebenenfalls Zusatz eines unpolaren Antisolvent, bestehend aus oder enthaltend ein oder mehrere unverzweigte, verzweigte oder cyclische Kohlenwasserstoffe, besonders bevorzugt eines Alkans oder Alkangemisches, ganz besonders bevorzugt Pentan, Hexan, Heptan, Cyclohexan, Isohexan, Isooctan (2,2,4-Trimethylpentan) oder Petrolether oder deren Mischungen, woraufhin das Produkt durch Filtrierung isoliert werden kann. Bei dieser Form der Aufreinigung kann auf die Zwischenisolierung des Rohprodukts verzichtet und (Thio)phosphorsäuretriamid in einer Reinheit von >95%, bevorzugt >97% und besonders bevorzugt >98% erhalten werden.

Das Antisolvens weist bei Normaldruck vorzugsweise einen Siedepunkt von unter 120 °C, besonders bevorzugt von unter 90 °C ganz besonders bevorzugt von unter 70°C auf, um kurze Trockenzeiten des isolierten Feuchtprodukts und eine einfache destillative Abtrennung vom Reaktionslösungsmittel und Rückführung in den Prozess zu ermöglichen. Bevorzugt wird entweder a) das Antisolvens bei einer Temperatur im Bereich von < 0 °C bis 60 °C, bevorzugt im Bereich von 50 °C bis 60 °C, zum Reaktionsgemisch dosiert und dann auf 0 °C bis 30 °C abgekühlt, oder b) das Reaktionsgemisch bei einer Temperatur im Bereich von 0 °C bis 60 °C, bevorzugt bei 15 °C bis 35 °C, zum Antisolvens dosiert und das Gemisch dann auf 0°C bis 30 °C temperiert. Die bevorzugte Endtemperatur beträgt in beiden Fällen 15 °C bis 25 °C. Die Variante a) ist bevorzugt, wenn die Isolierung des asymmetrischen (Thio)phosphorsäuretriamids über eine Zentrifuge erfolgen soll, die Variante b) wird bei Isolierung mittels eines Nutschfilters bevorzugt.

In einer vorteilhaften Ausgestaltung der Erfindung wird das Lösungsmittel und/oder das zur Fällung benutzte Antisolvent rückgewonnen und wieder in das Verfahren eingespeist. Die Rückgewinnung des Lösungsmittels geschieht bevorzugt durch Destillation welche auch teilweise oder vollständig im Rahmen der destillativen Erhöhung der Produktkonzentration erfolgt, wohingegen bei der Destillation der Mutterlaugen und Waschfiltrate bei der Produktisolierung ebenfalls eine zumindest teilweise Rückgewinnung des Lösungsmittels und/oder Antisolvens erfolgen kann. Alternativ können Destillate, Mutterlaugen und Waschfiltrate mit positiver Energiebilanz thermisch verwertet werden.

Die Hilfsbase kann rückgewonnen und wieder in das Verfahren eingespeist werden. Die Rückgewinnung geschieht bevorzugt durch Destillation im Rahmen der Rückführungen von Lösungsmittel und Antisolvens und/oder bei der Aufarbeitung der wässrigen Extrakte.

Gegenüber dem oben dokumentierten Stand der Technik hat das beschriebene Verfahren den Vorteil, bei oder nahe bei Normaldruck durchgeführt werden zu können, d. h. keine Spezialapparate zu erfordern, sondern in den in der Feinchemie üblichen Standard-Batch-Kesselanlagen durchführbar zu sein, ohne dass größere Umstellungen der Konfiguration erforderlich sind. Dabei können die Produkte bei vergleichsweise geringen Ammoniaküberschüssen in guten Ausbeuten, hohen Reinheiten und hohen Raum-Zeit-Ausbeuten erhalten werden.

### Beispiele

Das vorliegende Verfahren wird durch die nachfolgenden Beispiele illustriert, ohne auf diese beschränkt zu sein.

### Beispiele 1 bis 4:

### Herstellung von NBPT bei verschiedenen Temperaturen:

1 Äq. Thiophosphorsäuretrichlorid wurde unter Ausschluss von Luft und Feuchtigkeit in trockenem Ethylacetat gelöst und die erhaltene Lösung auf die Untergrenze des angegebenen Temperaturbereichs abgekühlt. Durch Zugabe von 1 Äq. Triethylamin unter Rühren bildete sich eine gelbe Suspension. Anschließend wurde 1 Äq. n-Butylamin unter Rühren so zudosiert, dass die Temperatur des Reaktionsgemisches im angegebenen Bereich blieb. Nach beendeter Umsetzung wurden 9.99 Äq. Ammoniak so eingeleitet, dass die Temperatur des Reaktionsgemisches im angegebenen Bereich blieb. Die erhaltene weiße Suspension wurde 1 h nachgerührt, die Temperatur dann langsam auf 10 °C erhöht, wobei gelöstes überschüssiges Ammoniak als Gas entwich. Das Reaktionsgemisch wurde mit 35 Äq. Wasser wurde gequencht, die wässrige Phase abgetrennt, die organische Phase mit Wasser gewaschen und am Rotationsverdampfer zur Trockene eingeengt. Die mittels HPLC (w/w) ermittelten Reinheiten und die reinheitskorrigierten Ausbeuten sind in Tabelle 1 angegeben.

**Tabelle 1**

| Beispiel | Temperaturbereich | Reinheit Rohprodukt | Ausbeute |
|---|---|---|---|
| 1* | -13 bis -5 °C | 74% | 61% |
| 2* | -25 bis -18 °C | 81% | 73% |
| 3 | -40 bis -35 °C | 91% | 89% |
| 4 | -55 bis -50 °C | 91% | 89% |

| | | | |
|---|---|---|---|
| * nicht erfindungsgemäß | | | |

### Beispiel 5:

### Herstellung von NBPT und Fällung des Produkts durch Zugabe eines Antisolvens

100 g Thiophosphorsäuretrichlorid wurden unter Ausschluss von Luft und Feuchtigkeit in 343.6 g trockenem Ethylacetat gelöst und die erhaltene Lösung auf -50 °C abgekühlt. Durch Zugabe von 59.7 g Triethylamin unter Rühren bildete sich eine gelbe Suspension, und dann 42.5 g n-Butylamin so zudosiert, dass die Temperatur des Reaktionsgemisches im Bereich von -50 °C bis -40 °C blieb. Nach beendeter Umsetzung wurden 98.5 g Ammoniak (9.99 Äq.) unter Rühren so eingeleitet, dass die Temperatur des Reaktionsgemisches im Bereich von -40 bis -50 °C blieb. Die erhaltene weiße Suspension wurde 1 h bei -50 °C nachgerührt, die Temperatur dann langsam auf 10 °C erhöht, wobei gelöstes überschüssiges Ammoniak als Gas entwich. Das Reaktionsgemisch wurde mit 269.9 g Wasser gequencht und die wässrige Phase abgetrennt. Die organische Phase wurde mit 50 g Wasser gewaschen und die vereinigten wässrigen Phasen zweimal mit je 100 g Ethylacetat rückextrahiert. Die vereinten organischen Phasen wurden unter vermindertem Druck bei <50 °C destillativ vom Lösungsmittel befreit, bis im Sumpf eine ca. 50%ige Lösung an NBPT vorlag. Bei einer Temperatur von 40 °C wurden 125 g Hexan zugegeben und das Gemisch langsam unter Rühren abgekühlt, wobei das Produkt nadelförmig kristallisierte. Es wurde weiter bis auf 10 °C abgekühlt, die ausgefallenen Kristalle auf einer Filternutsche abgesaugt und zweimal mit je 50 g kaltem Hexan gewaschen. Der Filterkuchen wurde bei Raumtemperatur im Vakuum getrocknet. Das isolierte NBPT wurde in einer Reinheit von 98.7% erhalten, die Ausbeute betrug 85.7% d. Th.

### Beispiel 6:

### Herstellung von NBPT mit reduzierter Ammoniak-Menge

Die Durchführung erfolgte analog zu Beispiel 5, jedoch wurden nur 78.8 g Ammoniak (7.99 Äq.) eingesetzt. Das isolierte NBPT wurde in einer Reinheit von >99.9% erhalten, die Ausbeute betrug 81.3% d. Th.

### Beispiel 7:

### Herstellung von NBPT mit wasserfreier Aufarbeitung

Die Durchführung erfolgte analog zu Beispiel 6, jedoch wurde die extraktive Aufarbeitung ersetzt durch eine Filtration der ausgefallenen Ammoniumsalze aus dem Reaktionsgemisch, gefolgt von einer Wäsche des Filterrückstands mit Ethylacetat. Das isolierte NBPT wurde in einer Reinheit von 99.8% erhalten, die Ausbeute betrug 82.5% d. Th.

### Beispiel 8:

### Herstellung von NBPT bei höherer Konzentration

Die Durchführung erfolgte analog zu Beispiel 6, jedoch wurden nur 300.6 g Ethylacetat als Lösungsmittel eingesetzt. Das isolierte NBPT wurde in einer Reinheit von 98.0% erhalten, die Ausbeute betrug 79.7% d. Th.

## Patentansprüche

1. Verfahren zur Herstellung von asymmetrischen (Thio)phosphorsäuretriamiden durch Umsetzung eines primären Amins mit (Thio)phosphorsäuretrichlorid zum entsprechenden (Thio)phosphorsäureamidodichlorid und/oder (Thio)phosphorsäurediamidomonochlorid und nachfolgender Umsetzung des gebildeten (Thio)phosphorsäureamidodichlorids und/oder (Thio)phosphorsäurediamidomonochlorids mit Ammoniak, **dadurch gekennzeichnet, dass** die Umsetzung des primären Amins mit (Thio)phosphorsäuretrichlorid zum entsprechenden (Thio)phosphorsäureamidodichlorid und/oder (Thio)phosphorsäurediamidomonochlorid und die nachfolgende Umsetzung des gebildeten (Thio)phosphorsäureamidodichlorids oder (Thio)phosphorsäurediamidomonochlorids mit Ammoniak als Ein-Topf-Variante erfolgt, dass die Umsetzung des (Thio)phosphorsäureamidodichlorids und/oder (Thio)phosphorsäurediamidomonochlorids mit Ammoniak teilweise, größtenteils oder vollständig bei einer Temperatur unter -30 °C, vorzugsweise im Bereich von -80 °C bis -32°C, besonders bevorzugt im Bereich von - 60° C bis -35 °C und ganz besonders bevorzugt im Bereich von -55°C bis -40°C durchgeführt wird, und dass das (Thio)phosphorsäureamidodichlorid und/oder (Thio)phosphorsäurediamidomonochlorid nicht isoliert wird.

2. Verfahren gemäß Anspruch 1 **dadurch gekennzeichnet, dass** das primäre Amin der Formel R-NH₂ entspricht, wobei R für einen unsubstituierten oder mit Alkyl, Aryl, Heteroaryl, Alkoxy, Aryloxy, Heteroaryloxy, Alkylthio, Arylthio, Heteroarylthio, Fluor, Chlor, Brom, Cyano, bevorzugt C₁-C₁₈ Alkyl, C₆-C₁₄ Aryl, C₄-C₁₃ Heteroaryl, C₁-C₁₈ Alkoxy, C₆-C₁₄ Aryloxy, C₄-C₁₃ Heteroaryloxy, C₁-C₁₈ Alkylthio, C₆-C₁₄ Arylthio, C₄-C₁₃ Heteroarylthio, Fluor, Chlor, Brom, Cyano, besonders bevorzugt C₁-C₈ Alkyl, C₆-C₁₀ Aryl, C₄-C₉ Heteroaryl, C₁-C₈ Alkoxy, C₆-C₁₀ Aryloxy, C₄-C₉ Heteroaryloxy, C₁-C₈ Alkylthio, C₆-C₁₀ Arylthio, C₄-C₉ Heteroarylthio, Fluor, Chlor, Brom, Cyano substituierten Alkyl-, Cycloalkyl-, Aryl- oder Heteroarylrest, bevorzugt C₁-C₁₈ Alkyl-, C₃-C₁₂ Cycloalkyl-, C₆-C₁₄ Aryl- oder C₄-C₁₃ Heteroarylrest, besonders bevorzugt C₁-C₁₀ Alkylrest, und ganz besonders bevorzugt für einen unsubstituierten C₁-C₆ Alkylrest am meisten bevorzugt für n-Butyl steht.

3. Verfahren gemäß einem der vorhergehenden Ansprüche, **dadurch gekennzeichnet, dass** die Umsetzung des primären Amins mit (Thio)phosphorsäuretrichlorid in Anwesenheit einer Hilfsbase, vorzugsweise eines tertiären Amins, besonders bevorzugt eines tertiären Trialkylamins, N-Alkylpyrrolidins, N-Alkylpiperidins, N-Alkylmorpholins, Dialkylanilins, Pyridins oder eines polycyclischen tertiären Amins mit heteroyclischer Struktur wie DABCO, DBU oder Chinuclidin erfolgt.

4. Verfahren gemäß einem der vorhergehenden Ansprüche, **dadurch gekennzeichnet, dass** bezogen auf (Thio)phosphorsäuretriamid, nicht mehr als 10 Äquivalente, vorzugsweise nicht mehr als 8 Äquivalente Ammoniak eingesetzt werden.

5. Verfahren gemäß einem der vorhergehenden Ansprüche, **dadurch gekennzeichnet, dass** die Umsetzung mit Ammoniak bei einem absoluten Druck von weniger als 3, vorzugsweise im Bereich von 0.5 bis 2 bar und besonders bevorzugt im Bereich von 0.8 bis 1.5 bar durchgeführt wird.

6. Verfahren gemäß einem der vorhergehenden Ansprüche, **dadurch gekennzeichnet, dass** für die Umsetzung des primären Amins mit (Thio)phosphorsäuretrichlorid und/oder für die Umsetzung des (Thio)phosphorsäureamidodichlorids oder (Thio)phosphorsäurediamidomonochlorids mit Ammoniak ein polares aprotisches organisches Lösungsmittel oder Lösungsmittelgemisch verwendet wird, welches eines oder mehrere der folgenden Lösungsmittel enthält: Ethylacetat, Propylacetat, Isopropylacetat, Butylacetat, Isobutylacetat, Tetrahydrofuran, 2-Methyltetrahydrofuran, 1,4-Dioxan, Diethylether, Düsopropylether, Di-n-propylether, Di-n-butylether, Methyl-tert-butylether, Düsobutylether, Dimethoxyethan, Aceton, Methylisobutylketon.

7. Verfahren gemäß einem der vorhergehenden Ansprüche, **dadurch gekennzeichnet, dass** die Umsetzung des primären Amins mit (Thio)phosphorsäuretrichlorid bei einer Temperatur von unter -20 °C, vorzugsweise im Bereich von -80 °C bis -25 °C, besonders bevorzugt im Bereich von -50°C bis kleiner -30 °C erfolgt.

8. Verfahren gemäß einem der vorhergehenden Ansprüche, **dadurch gekennzeichnet, dass** bei der Reaktion entstandene Ammoniumsalze durch wässrige Extraktion aus dem Reaktionsgemisch entfernt werden.

9. Verfahren gemäß einem der vorhergehenden Ansprüche, **dadurch gekennzeichnet, dass** bei der Reaktion entstandene Ammoniumsalze durch Filtration aus dem Reaktionsgemisch entfernt werden.

10. Verfahren gemäß einem der vorhergehenden Ansprüche, **dadurch gekennzeichnet, dass** das Produkt aus dem Reaktionsmedium durch Zusatz eines unpolaren organischen Lösungsmittels vorzugsweise bestehend oder enthaltend ein oder mehrere unverzweigte, verzweigte oder cyclische Kohlenwasserstoffe, gefällt und durch Filtrierung isoliert wird.

11. Verfahren gemäß einem der vorhergehenden Ansprüche, **dadurch gekennzeichnet, dass** zur Umsetzung des (Thio)phosphorsäureamidodichlorids oder (Thio)phosphorsäurediamidomonochlorids mit Ammoniak, (Thio)phosphorsäureamidodichlorid oder (Thio)phosphorsäurediamidomonochlorid oder das Reaktionsgemisch enthaltend (Thio)phosphorsäureamidodichlorid oder (Thio)phosphorsäurediamidomonochlorid vorgelegt und Ammoniak zugegeben wird.

12. Verfahren gemäß einem der vorhergehenden Ansprüche, **dadurch gekennzeichnet, dass** das primäre Amin mit (Thio)phosphorsäuretrichlorid zum entsprechenden (Thio)phosphorsäureamidodichlorid und das gebildete (Thio)phosphorsäureamidodichlorid nachfolgend mit Ammoniak zum (Thio)phosphorsäuretriamid umgesetzt wird.

13. Verfahren gemäß Anspruch 12, **dadurch gekennzeichnet, dass** bezogen auf (Thio)-phosphorsäuretriamid 0,8 bis 1,2 Äquivalente des primären Amins eingesetzt werden.

14. Verfahren gemäß Anspruch 3, **dadurch gekennzeichnet, dass** für die Umsetzung des primären Amins mit (Thio)phosphorsäuretrichlorid zum entsprechenden (Thio)phosphorsäureamidodichlorid auf 0,8 bis 1,2 Äquivalente der Hilfsbase eingesetzt werden.

## Claims

1. Method for preparing asymmetric (thio)phosphoric triamides by reacting a primary amine with (thio)phosphoric trichloride to give the corresponding (thio)phosphoric amidodichloride and/or (thio)phosphoric diamidomonochloride and subsequent reaction of the (thio)phosphoric amidodichloride and/or (thio)phosphoric diamidomonochloride formed with ammonia, **characterized in that** the reaction of the primary amine with (thio)phosphoric trichloride to give the corresponding (thio)phosphoric amidodichloride and/or (thio)phosphoric diamidomonochloride and the subsequent reaction of the (thio)phosphoric amidodichloride or (thio)phosphoric diamidomonochloride formed with ammonia is carried out as a one-pot variant, that the reaction of the (thio)phosphoric amidodichloride and/or (thio)phosphoric diamidomonochloride with ammonia is carried out partly, mainly or completely at a temperature below -30°C, preferably in the range of -80°C to -32°C, particularly preferably in the range of -60°C to -35°C and especially preferably in the range of -55°C to -40°C, and that the (thio)phosphoric amidodichloride and/or (thio)phosphoric diamidomonochloride is not isolated.

2. Method according to Claim 1, **characterized in that** the primary amine corresponds to the formula R-NH2, where R is an unsubstituted alkyl, cycloalkyl, aryl or heteroaryl residue or an alkyl, cycloalkyl, aryl or heteroaryl residue substituted with alkyl, aryl, heteroaryl, alkoxy, aryloxy, heteroaryloxy, alkylthio, arylthio, heteroarylthio, fluorine, chlorine, bromine, cyano, preferably C₁-C₁₈ alkyl, C₆-C₁₄ aryl, C₄-C₁₃ heteroaryl, C₁-C₁₈ alkoxy, C₆-C₁₄ aryloxy, C₄-C₁₃ heteroaryloxy, C₁-C₁₈ alkylthio, C₆-C₁₄ arylthio, C₄-C₁₃ heteroarylthio, fluorine, chlorine, bromine, cyano, particularly preferably C₁-C₈ alkyl, C₆-C₁₀ aryl, C₄-C₉ heteroaryl, C₁-C₈ alkoxy, C₆-C₁₀ aryloxy, C₄-C₉ heteroaryloxy, C₁-C₈ alkylthio, C₆-C₁₀ arylthio, C₄-C₉ heteroarylthio, fluorine, chlorine, bromine, cyano, preferably is a C₁-C₁₈ alkyl, C₃-C₁₂ cycloalkyl, C₆-C₁₄ aryl or C₄-C₁₃ heteroaryl residue, particularly preferably a C₁-C₁₀ alkyl residue, and especially preferably is an unsubstituted C₁-C₆ alkyl residue, most preferably n-butyl.

3. Method according to either of the preceding claims, **characterized in that** the reaction of the primary amine with (thio)phosphoric trichloride takes place in the presence of an auxiliary base, preferably a tertiary amine, particularly preferably a tertiary trialkylamine, N-alkylpyrrolidine, N-alkylpiperidine, N-alkylmorpholine, dialkylaniline, pyridine or a polycyclic tertiary amine with a heterocylic structure such as DABCO, DBU or quinuclidine.

4. Method according to any of the preceding claims, **characterized in that** not more than 10 equivalents, preferably not more than 8 equivalents of ammonia are used, based on (thio)phosphoric triamide.

5. Method according to any of the preceding claims, **characterized in that** the reaction with ammonia is carried out at an absolute pressure of less than 3, preferably in the range of 0.5 to 2 bar and especially preferably in the range of 0.8 to 1.5 bar.

6. Method according to any of the preceding claims, **characterized in that**, for the reaction of the primary amine with (thio)phosphoric trichloride and/or for the reaction of the (thio)phosphoric amidodichloride or (thio)phosphoric diamidomonochloride with ammonia, a polar aprotic organic solvent or solvent mixture is used comprising one or more of the following solvents: ethyl acetate, propyl acetate, isopropyl acetate, butyl acetate, isobutyl acetate, tetrahydrofuran, 2-methyltetrahydrofuran, 1,4-dioxane, diethyl ether, diisopropyl ether, di-n-propyl ether, di-n-butyl ether, methyl tert-butyl ether, diisobutyl ether, dimethoxyethane, acetone or methyl isobutyl ketone.

7. Method according to any of the preceding claims, **characterized in that** the reaction of the primary amine with (thio)phosphoric trichloride is carried out at a temperature below -20°C, preferably in the range of-80°C to -25°C, particularly preferably in the range of -50°C to less than -30°C

8. Method according to any of the preceding claims, **characterized in that** ammonium salts formed in the reaction are removed from the reaction mixture by aqueous extraction.

9. Method according to any of the preceding claims, **characterized in that** ammonium salts formed in the reaction are removed from the reaction mixture by filtration.

10. Method according to any of the preceding claims, **characterized in that** the product is precipitated from the reaction medium by addition of a non-polar organic solvent preferably consisting of or comprising one or more unbranched, branched or cyclic hydrocarbons and is isolated by filtration.

11. Method according to any of the preceding claims, **characterized in that** for the reaction of the (thio)phosphoric amidodichloride or (thio)phosphoric diamidomonochloride with ammonia, (thio)phosphoric amidodichloride or (thio)phosphoric diamidomonochloride or the reaction mixture comprising (thio)phosphoric amidodichloride or (thio)phosphoric diamidomonochloride is initially charged and ammonia is added.

12. Method according to any of the preceding claims, **characterized in that** the primary amine is reacted with (thio)phosphoric trichloride to give the corresponding (thio)phosphoric amidodichloride and the (thio)phosphoric amidodichloride formed is subsequently reacted with ammonia to give the (thio)phosphoric triamide.

13. Method according to Claim 12, **characterized in that** 0.8 to 1.2 equivalents of the primary amine are used, based on (thio)phosphoric triamide.

14. Method according to Claim 3, **characterized in that** 0.8 to 1.2 equivalents of the auxiliary base are used for the reaction of the primary amine with (thio)phosphoric trichloride to give the corresponding (thio)phosphoric amidodichloride.

## Revendications

1. Procédé pour la préparation de triamides asymétriques de l'acide (thio)phosphorique par transformation d'une amine primaire avec du trichlorure de l'acide (thio)phosphorique en amidodichlorure de l'acide (thio)phosphorique correspondant et/ou en diamidomonochlorure de l'acide (thio)phosphorique correspondant et transformation consécutive de l'amidodichlorure de l'acide (thio)phosphorique formé et/ou du diamidomonochlorure de l'acide (thio)phosphorique formé avec de l'ammoniac, **caractérisé en ce que** la transformation de l'amine primaire avec du trichlorure de l'acide (thio)phosphorique en amidodichlorure de l'acide (thio)phosphorique correspondant et/ou en diamidomonochlorure de l'acide (thio)phosphorique correspondant et la transformation consécutive de l'amidodichlorure de l'acide (thio)phosphorique formé ou du diamidomonochlorure de l'acide (thio)phosphorique formé avec de l'ammoniac ont lieu comme variante monotope, **en ce que** la transformation de l'amidodichlorure de l'acide (thio)phosphorique et/ou du diamidomonochlorure de l'acide (thio)phosphorique avec de l'ammoniac est réalisée partiellement, en grande partie ou complètement à une température inférieure à -30°C, de préférence dans la plage de -80°C à -32°C, de manière particulièrement préférée dans la plage de -60°C à -35°C et de manière tout particulièrement préférée dans la plage de -55°C à -40°C et **en ce que** l'amidodichlorure de l'acide (thio)phosphorique et/ou le diamidomonochlorure de l'acide (thio)phosphorique n'est pas isolé.

2. Procédé selon la revendication 1, **caractérisé en ce que** l'amine primaire correspond à la formule R-NH₂, R représentant un radical alkyle, cycloalkyle, aryle ou hétéroaryle, de préférence un radical C₁-C₁₈-alkyle, C₃-C₁₂-cycloalkyle, C₆-C₁₄-aryle ou C₄-C₁₃-hétéroaryle, de manière particulièrement préférée un radical C₁-C₁₀-alkyle, non substitué ou substitué par alkyle, aryle, hétéroaryle, alcoxy, aryloxy, hétéroaryloxy, alkylthio, arylthio, hétéroarylthio, fluor, chlore, brome, cyano, de préférence par C₁-C₁₈-alkyle, C₆-C₁₄-aryle, C₄-C₁₃-hétéroaryle, C₁-C₁₈-alcoxy, C₆-C₁₄-aryloxy, C₄-C₁₃-hétéroaryloxy, C₁-C₁₈-alkylthio, C₆-C₁₄-arylthio, C₄-C₁₃-hétéroarylthio, fluor, chlore, brome, cyano, de manière particulièrement préférée par C₁-C₈-alkyle, C₆-C₁₀-aryle, C₄-C₉-hétéroaryle, C₁-C₈-alcoxy, C₆-C₁₀-aryloxy, C₄-C₉-hétéroaryloxy, C₁-C₈-alkylthio, C₆-C₁₀-arylthio, C₄-C₉-hétéroarylthio, fluor, chlore, brome, cyano, et de manière tout particulièrement préférée un radical C₁-C₆-alkyle non substitué, le plus préférablement n-butyle.

3. Procédé selon l'une quelconque des revendications précédentes, **caractérisé en ce que** la transformation de l'amine primaire avec du trichlorure de l'acide (thio)phosphorique a lieu en présence d'une base auxiliaire, de préférence d'une amine tertiaire, de manière particulièrement préférée d'une trialkylamine tertiaire, de N-alkylpy-rrolidine, de N-alkylpipéridine, de N-alkylmorpholine, de dialkylaniline, de pyridine ou d'une amine tertiaire polycyclique présentant une structure hétérocyclique, telle que DABCO, DBU ou quinuclidine.

4. Procédé selon l'une quelconque des revendications précédentes, **caractérisé en ce que**, par rapport au triamide de l'acide (thio)phosphorique, on n'utilise pas plus de 10 équivalents, de préférence pas plus de 8 équivalents, d'ammoniac.

5. Procédé selon l'une quelconque des revendications précédentes, **caractérisé en ce que** la transformation avec l'ammoniac est réalisée à une pression absolue inférieure à 3 bars, de préférence dans la plage de 0,5 à 2 bars et de manière particulièrement préférée dans la plage de 0,8 à 1,5 bar.

6. Procédé selon l'une quelconque des revendications précédentes, **caractérisé en ce qu'**on utilise, pour la transformation de l'amine primaire avec du trichlorure de l'acide (thio)phosphorique et/ou pour la transformation de l'amidodichlorure de l'acide (thio)phosphorique ou du diamidomonochlorure de l'acide (thio)phosphorique avec de l'ammoniac, un solvant organique polaire aprotique ou un mélange de solvants organiques polaires aprotiques, qui contient un ou plusieurs des solvants suivants : acétate d'éthyle, acétate de propyle, acétate d'isopropyle, acétate de butyle, acétate d'isobutyle, tétrahydrofuranne, 2-méthyltétrahydrofuranne, 1,4-dioxane, diéthyléther, diisopropyléther, di-n-propyléther, di-n-butyléther, méthyl-tert-butyléther, diisobutyléther, diméthoxyéthane, acétone, méthylisobutylcétone.

7. Procédé selon l'une quelconque des revendications précédentes, **caractérisé en ce que** la transformation de l'amine primaire avec du trichlorure de l'acide (thio) phosphorique a lieu à une température inférieure à -20°C, de préférence dans la plage de -80°C à -25°C, de manière particulièrement préférée dans la plage de -50°C à moins de -30°C.

8. Procédé selon l'une quelconque des revendications précédentes, **caractérisé en ce que** les sels d'ammonium formés lors de la réaction sont éliminés du mélange réactionnel par extraction aqueuse.

9. Procédé selon l'une quelconque des revendications précédentes, **caractérisé en ce que** les sels d'ammonium formés lors de la réaction sont éliminés du mélange réactionnel par filtration.

10. Procédé selon l'une quelconque des revendications précédentes, **caractérisé en ce que** le produit est précipité du mélange réactionnel par addition d'un solvant organique non polaire, de préférence constitué par ou contenant un ou plusieurs hydrocarbures non ramifiés, ramifiés ou cycliques, et isolé par filtration.

11. Procédé selon l'une quelconque des revendications précédentes, **caractérisé en ce que**, pour la transformation de l'amidodichlorure de l'acide (thio)phosphorique ou du diamidomonochlorure de l'acide (thio)phosphorique avec de l'ammoniac, on dispose au préalable l'amidodichlorure de l'acide (thio)phosphorique ou le diamidomonochlorure de l'acide (thio)phosphorique ou le mélange réactionnel contenant l'amidodichlorure de l'acide (thio)phosphorique ou le diamidomonochlorure de l'acide (thio)phosphorique et on ajoute l'ammoniac.

12. Procédé selon l'une quelconque des revendications précédentes, **caractérisé en ce que** l'amine primaire est transformée avec du trichlorure de l'acide (thio)phosphorique en amidodichlorure de l'acide (thio)phosphorique correspondant et l'amidodichlorure de l'acide (thio)phosphorique formé est ensuite transformé avec de l'ammoniac en triamide de l'acide (thio)phosphorique.

13. Procédé selon la revendication 12, **caractérisé en ce qu'**on utilise, par rapport au triamide de l'acide (thio)phosphorique, 0,8 à 1,2 équivalent de l'amine primaire.

14. Procédé selon la revendication 3, **caractérisé en ce qu'**on utilise, pour la transformation de l'amine primaire avec du trichlorure de l'acide (thio)phosphorique en amidodichlorure de l'acide (thio)phosphorique correspondant, 0,8 à 1,2 équivalent de base auxiliaire.
